# EUROPEAN PATENT APPLICATION

(11) **EP 1 891 861 A1**
(43) Date of publication of application: **27.02.2008**
(21) Application number: 07380233.2
(22) Date of filing: 08.08.2007
(51) Int. Cl.: A23B 4/06, A23L 1/325, A23B 4/005

(54) **Procedure for restoring and/or improving the nutritional and/or sensorial quality of canned fish**

(30) Priority: 23.08.2006 ES 200602241
(71) Applicant: Jealsa Rianxeira, S.A., 15930 Boiro La Coruña (ES)
(72) Inventor: Santal Rodriguez, Antonio, 15930 Bodio (A Coruña) (ES); Monferrer Ballester, Albert, 15930 Bodio (A Coruña) (ES)
(74) Representative: Carpintero Lopez, Francisco

(57) **Abstract**

Procedure for restoring and/or improving the nutritional and/or sensorial quality of canned fish, which based on recovery of the juices from the stage of cooking the fish, comprises the stages of concentrating said juices, preparing a puree based on the concentrated juices and subsequently, adding it and distributing it homogenously to the cooked fish. The invention additionally relates to a restored and/or improved fish obtained from the preceding procedure.

## Description

### OBJECT OF THE INVENTION

The present invention relates to a procedure for restoring and/or improving the nutritious and/or sensorial quality of canned fish subjected to a cooking and dehydration process, with a view to satisfying the demands of particular markets.

### BACKGROUND OF THE INVENTION

The present invention is designed for fish processing companies, in particular canning companies that are appropriately equipped to process juices from cooking fish prior to canning.

The current situation in the canning sector, within the context of economic globalisation, requires canning companies to permanently invest in new machinery, to improve product quality, and launch new products, in order to remain competitive in national and international markets.

Traditionally, the canning industry uses cooked fish to fill different types of containers following heat-based pasteurisation or sterilisation treatments. The fish cooking process causes a loss of the juices inherent to the treated fish. These fish juices contain proteins and other particularly nutritious elements, such as salts and trace elements of top nutritional quality. The loss of these elements also causes a loss of texture, giving rise to a drier, less appetising fish than the original.

It is relevant to note that disposing of these juices is an important environmental problem. It is worth bearing in mind that their purification is costly due to their high demand for oxygen as a main consequence of the protein content, which is normally about 2.5%. It is calculated that, for example, the tuna industry wastes about 15-20% of the muscle weight clean and ready for canning.

### DESCRIPTION OF THE INVENTION

Taking into consideration the problems set out above, the invention described herein is designed to recover the juices or stock from cooking fish and to return them to the original product, with a view to restoring the product's original nutritional characteristics. These fish juices are rich in proteins, salts, and trace elements of a high nutritional quality, whose loss causes a change in texture.

Therefore, this procedure manages to restore and/or improve the nutritional and/or sensorial quality of a natural raw material, like fish, which has been previously subjected to a cooking process and, consequently, to dehydration. The procedure likewise makes it possible to modify the organoleptic characteristics (texture, taste, colour, etc.,) of the end product, in this case, canned fish. Therefore, the needs of particular markets can be satisfied, essentially, by adding the fish stock from cooking to the product as required.

The procedure starts with a recovery of the juice or stock from cooking and, therefore, the fish's dehydration. Cooking may be carried out either by means of a system for cooking in water (boiling) or steam cooking. In all events, the temperature of the fish is raised to a programmed value, for a time that depends on the size or piece of the fish and its initial temperature, although the end of cooking is determined by the temperature reached in the heart of the piece of fish, in other words, its spinal temperature.

The higher the spinal temperature reached, the lower the degree of humidity, and greater the protein denaturalisation, lower functionality of the meat and, consequently, lower capacity of the meat to retain liquids. In short, the higher the spinal temperature and longer the cooking time, the higher will be the loss, which is in a range of 18-20%. The maximum humidity limit is defined by the subsequent stages to cooking: scaling and packaging and sterilisation operations.

These stocks are identified by species, batches and origin based on the traceability protocol applied to cooking.

Optionally, the recovered juice or stock can be subjected to a process of hydrolysis.

The recovered juice or stock from cooking is subjected to a phase of concentration with a view to obtaining a preservable concentrate by concentration of solids, between 2.5 and 50% in solid weight, of which between 10% and 40% are salts, sodium chloride and phosphates of organic origin.

Next, the concentrated stock is mixed with water and fish paste, which consists of finely mashed raw fish and, subsequently, grinding and filtering in a liquid phase to produce a homogenous puree or paste with a particle size of less than 0.5 mm and viscosity of between 2,500 cps (2.5 Pa.s) and 17,500 cps (17.5 Pa.s) at 20°C. Thus, a puree or paste is made that may contain other additives and/or ingredients allowed by the food industry. At this stage, it is important to achieve the right viscosity for efficient distribution of the paste between the fish muscle fibres.

Then, the procedure is to add the puree or paste to the previously cooked fish in an amount sufficient to restore its original properties, at a temperature of between -4°C and 20°C, for a duration of between 8 and 12 hours. Optionally, this phase can be performed by immersion in tubs, which, in turn, can be performed with stirring of the liquid phase.

In addition, it can also be performed by direct injection of the paste in the fish, in which case the dosage will be by volume, according to the former weight of the block of product for processing.

The next stage is to distribute the added paste homogenously by means of direct contact with the fish, with the contact time depending on the type of process used. This will favour the distribution or spreading of the puree or paste. For this process, a cold rest system is used and other active mechanical systems such as vacuum massage, ultrasound massage and vibration.

Finally, the canning phase is conducted and subsequent sterilisation of the canned restored fish.

According to an optional procedure, this homogenous distribution of the puree comprises vacuum massage for 2 minutes at 0°C and subsequently, 12 hours rest at between 0 and 4°C.

According to another optional realization, the homogenous distribution of the puree comprises an ultrasound massage for 20 minutes at 0°C, subsequently rest for 12 hours at between 0 and 4°C and a second massage similar to the first.

### EXAMPLES OF EMBODIMENTS OF THE INVENTION

### EXAMPLE 1

The starting point is the raw material, which may be fish blocks, in other words, pieces of fish with a regular fixed shape and size, identical to a parallelepiped, which are previously pressed in moulds. It is also possible to start with fish steaks of irregular shape and size.

The fish is cooked with the consequent loss of juice that is rich in proteins and salts. The juice from cooking the fish is recovered and subjected to a hydrolysis treatment for then sending to a concentration phase.

Concentration of the stock is based on pressure reduction and a heat exchange, using multiple phase evaporators. The resulting concentrated stock contained 50% of solids corresponding to salts, sodium chloride and organic origin phosphates. The salt can also come from the brine used for freezing the fish at high sea.

The concentrated stock was mixed with fish paste, consisting of finely mashed raw fish. This fish paste was added to the stock before mixing and grinding in liquid phase. For this, a cutter machine was used and then a colloid mill. Water was added until achieving a concentration of solids of 2.5% of which 0.5% is sodium chloride and 0.04% is P₂O₅. The objective is to obtain a homogenous fish puree or paste with a sufficiently fine particle size of less than 0.5 mm. This will guarantee a good distribution of the puree in the cooked fish.

The cooked fish is immersed and refrigerated at 0°C in tubs of the puree for 4 hours.

Next, for homogenous distribution of the added puree, it is introduced into a massage pump for increasing contact between the fish and the puree and a massage was applied in vacuum at a speed of 6 rpm, for 2 minutes. Then, the fish was left to settle for 12 hours, at between 0 and 4°C.

In this case, the initial weight of the fish increased by 7% and appeared less compact than usual.

The restored fish was canned in water and salt as a governing liquid. Subsequently, sterilisation took place.

There were no notable differences in colour, smell, or taste in relation to the traditional product. Absorption of the governing liquid took place as usual.

### EXAMPLE 2

In another example, starting with irregular shaped fish steaks, the procedure was to prepare the paste or puree in the same way as in the preceding example except that the recovered juice was not subjected to hydrolysis. The immersion of the cooked fish cooled to 4°C was likewise done in tubs containing the puree or paste. However, in this case, the massage was by ultrasound following the immersion.

This ultrasound massage involved a first massage for 20 minutes at 0°C, subsequent rest for 12 hours and then another identical massage to the first one.

The restored fish was canned using olive oil as a governing liquid. Subsequently, it was sterilised. In this embodiment, there were also no notable differences in colour, smell or taste in relation to the traditional product. Absorption of the governing liquid took place in the same way as usual.

## Claims

1. Procedure for restoring and/or improving the nutritional and/or sensorial quality of canned fish, previously subjected to cooking, **characterised in that** based on the recovery of the juices from cooking the fish it comprises the stages of:
- juice concentration, in order to obtain a preservable concentrated stock that contains between 2.5 and 50% in solid weight;
- mixing of the concentrated stock with fish paste and water until producing a homogenous puree with a particle size of less than 0.5mm;
- adding of the puree to the previously cooked fish at a temperature of between -4 and 20°C;
- homogenous distribution of the added puree through direct contact with the fish;
- canning and sterilisation of the restored fish.

2. Procedure according to claim 1, **characterised in that** before stage a) the recovered juice is subjected to a hydrolysis treatment.

3. Procedure according to claims 1 and 2, **characterised in that** the adding of the puree is done by immersion in tubs for between 8 and 12 hours.

4. Procedure according to claim 3, **characterised in that** immersion takes place with stirring in the liquid phase.

5. Procedure according to claims 1 and 2, **characterised in that** the adding of the puree is done by injection at a temperature of between -4 and 20°C.

6. Procedure according to claims 1 to 5, **characterised in that** the homogenous distribution comprises a vacuum massage for 2 minutes at a temperature of 0°C and subsequent rest for 12 hours, at between 0 and 4°C.

7. Procedure according to claims 1 to 5, **characterised in that** the homogenous distribution is done by means of a first massage by ultrasound, for 20 minutes at a temperature of 0°C, with subsequent rest for 12 hours, at between 0 and 4°C and a second massage similar to the first.

8. Restored fish according to the procedure of claim 1, **characterised in that** it contains a higher concentration of trace elements, phosphates and proteins and organoleptic characteristics and governing liquid absorption similar to that of the non-restored fish.
